(19)

Europäisches
Patentamt
European
Patent Office
Office européen
des brevets

(11) **EP 3 955 261 A2**

(12) **EUROPEAN PATENT APPLICATION**

(43) Date of publication:
**16.02.2022 Bulletin 2022/07**

(21) Application number: **21174250.7**

(22) Date of filing: **18.05.2021**

(51) International Patent Classification (IPC):
**G21B 3/00** *(2006.01)* **G21G 7/00** *(2009.01)*
**G21H 1/02** *(2006.01)* **G21H 1/04** *(2006.01)*

(52) Cooperative Patent Classification (CPC):
**G21B 3/002; G21G 7/00;** G21H 1/02; G21H 1/04

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.05.2020 IT 202000011491**

(71) Applicant: **Solitonix S.r.l.**
**32100 BELLUNO (BL) (IT)**

(72) Inventor: **Righes, Fabrizio**
**32100 BELLUNO (IT)**

(74) Representative: **Muraro, Alfeo Federico**
**Studio Alfeo Muraro**
**Lungadige G. Leopardi, 81**
**38122 Trento (IT)**

(54) **METHOD FOR ENERGY GENERATION, ENERGY GENERATOR, AND ELECTRIC GENERATOR USING SUCH ENERGY GENERATOR**

(57)     A method for energy generation, comprising the following operations: providing an emitting body (1) in a metal that defines a metallic lattice suited to store hydrogen; causing the storage of hydrogen in the metallic lattice; exposing the emitting body (1) to a stimulation to excite the hydrogen stored in the metallic lattice to obtain the emission of energy; modulating the stimulation over time in such a way as to control the emission of energy.

Fig. 2

## Description

### Field of application

The present invention is generally applicable to the technical field of devices for generating nuclear reactions. In particular, the invention has as its object a method and a generator for the generation of nuclear energy, particularly but not exclusively suited to be used for producing electric energy.

### State of the Art

As known, currently, the high-intensity energy needed for the human activities is obtained through combustion of fossil fuels, or through nuclear fission.

The above mentioned techniques has the drawback of releasing polluting materials in the environment, the danger of which can be limited only in part, and anyway at high costs.

A further drawback of the above mentioned techniques is that, in order to be economically feasible, they require high power plants.

Moreover, the energy sources used in the above mentioned techniques have the further drawback that they are not renewable, hence they are subject to depletion in a more or less short time.

Other so-called "renewable" sources of energy did not prove capable of sustaining the basic energetic needs, due to the variability of the supplied energy, and to their high environmental impact.

Therefore, there is an increasingly felt need to obtain high-intensity energy sources that do not suffer the above mentioned drawbacks.

The above mentioned need has addressed the scientific investigation towards little known fields, in particular to the phenomenon of the so-called "anomalous excess heat", now documented by several scientific experiments. The phenomenon concerns production of heat by specific materials, that cannot be explained through known chemical processes. Because such phenomenon is accompanied by emission of neutrons and transmutation of elements, it was attributed to nuclear processes. Unlike fission nuclear reactions used, for example, in the conventional nuclear power reactors, the mentioned above nuclear reactions have the advantage that they occur at ambient temperature, and do not release radioactive products, at least not in the same quantity as it can be found in fission processes.

So far, the above mentioned phenomenon has been observed particularly in metals that are loaded with hydrogen, or with its isotopes. More specifically, it is known that some metals, under specific conditions, are capable of storing atomic hydrogen in the interstitial spaces of their lattices, in a considerably higher concentration compared to those that can be found ordinarily in the same metals in nature. In such conditions, generation of the above mentioned anomalous excess heat may occur, which is particularly evident in metals such as palladium and nickel, even though it appear to concern, more generally, all transition metals.

Today, the existence of the phenomenon of the anomalous excess heat is pacifically accepted by a part of the scientific community, and has been widely discussed during the 22nd Conferenza Internazionale sulla Scienza Nucleare della Materia Condensata (International Conference on Condensed Matter Nuclear Science), held in Assisi (Italy) in 2019, for example in the presentations titled "LENR evidence with hydrogen and deuterium loading in thin palladium films" by U. Mastromatteo, "Laser Condensed-Matter Fusion Experiments, Oral and Poster" by T. Uchikoshi et al, "Physical Model for Lattice Assisted Nuclear Reactions" by J. Garai, "The Least Action Nuclear Process [LANP] Computer Model of Cold Fusion Poster" by D. S. Szumski. Szumski himself explained the same phenomenon in US patent application no. US 2016/322119 entitled to him, in particular for the cases of palladium and nickel.

As regards the presentation by Garai, which concerns a palladium-deuterium system, the author suggests that the thereby occurring nuclear reaction is connected to an excitation of the deuterium at its fundamental resonance frequency inside the lattice interstices, and also suggests that the same occurs for hydrogen as well.

According to the technique described by Szumski in US'119, an anode and a cathode made in Pd, Pt, Ni or in other metals are immersed in water ($H_2O$) or in heavy water ($D_2O$) at a temperature of 50-60°C, and they are connected to a predefined electrical voltage. The electrolytic effect causes release of $H_2$ or D2 by the water, and their storing in the cathode. At the same time, an anomalous heat generation can be observed, that increases as the loading process goes on, together with a transmutation of the elements that constitute the metal.

According to Szumski, the occurrence of the above mentioned phenomenon is due to a progressive storing of energy inside the lattice, that Szumski defines in terms of a "radiation temperature", which represents the flow of electromagnetic energy exchanged adiabatically between fundamental particles, and thus differs from the usual "thermodynamic temperature". As the loading proceeds, the above mentioned radiation temperature increases until triggering nuclear reactions due to Mössbauer effect.

According to a further theory, formulated by physicist Luca Gamberale in its article titled "Coherent Neutron Production" dated May 2020 to explain the phenomenon of low-energy nuclear reactions (LENR), the protons - in particular, hydrogen nuclei - confined in a metallic lattice can be set in a state of coherent vibration under the effect of the interaction with an electromagnetic field. The above mentioned state of coherence causes a reduction of the energetic barrier to be overcome in order to induce the confined protons to capture electrons, thus obtaining neutrons. The author suggests that the same state of coherence might as well reduce the energy that is needed to induce other protons to capture the neutrons so obtained, without generating y radiation.

In a further article titled "Electrolytic co-deposition neutron production measured by bubble detectors" by Smith, Hendricks, and Steinetz (NASA), published on 19/01/2021 in the Journal of Electroanalytical Chemistry 882 (2021) 115024, an experiment is described concerning electrolytic co-deposition of palladium and deuterium (PdD) on a gold cathode immersed in a solution containing heavy water ($D_2O$) and palladium chloride, from which neutron emission is achieved.

In a further article titled "Experimental Observations of Nuclear Activity in Deuterated Materials Subjected to a Low-Energy Photon Beam", by several authors among whom the above mentioned Steinetz and Hendricks, published in 2017, a test is described in which a deuterium-loaded transition metal (erbium or hafnium) generates gamma radiation and new isotopes after exposure to a coherent beam from a LINAC (Linear Particle Accelerator), that indicates the triggering of a nuclear reaction.

Whatever the possible explanation, the phenomenon is not yet understood in detail, hence it is not easily replicable. As a consequence, the experiments carried out so far were confined to the scientific field, and they did not find practical application, mainly because they suffer the drawback of not allowing an effective control of the generated flow of energy in order to maintain a constant intensity.

Summary of the invention

The present invention aims at overcoming the above mentioned drawbacks of the prior art, at least in part.

In particular, it is an aim of the invention to disclose a method for generating energy by inducing a nuclear reaction in a metallic body.

It is also an aim of the invention to carry out the above mentioned method at ambient temperature, in any case below the temperature the conventional nuclear reactions used to generate energy, in particular the fission in the ordinary nuclear power reactors, ordinarily occur.

Another aim of the invention is that the generation of energy can be maintained over time, and that the intensity thereof can be controlled.

It is also an aim of the invention that the above mentioned method does not cause emission of high-energy particles and radiations such as, for example, y radiations.

More particularly, it is an aim of the invention that the above mentioned method does not cause formation of radioactive residues in the metallic body.

The above mentioned aims are reached by a method according to the main claim.

Further detail features of the invention are specified in the relating dependent claims.

According to a first aspect, the invention concerns a method for the generation of energy, that envisages the storage of hydrogen in the metallic lattice of an emitting body at a higher concentration compared to the concentration that can be found in the same metal in nature, and to stimulate the thereby loaded emitting body in order to excite the hydrogen until obtaining the emission of the above mentioned energy, the stimulation being then modulated to control the emission.

According to a further aspect, the invention concerns a method for controlling the emission of energy from the above mentioned metallic emitting body when loaded in hydrogen.

According to a further aspect, the invention concerns a method for the generation of electric energy, comprising converting the energy emitted by the above mentioned metallic emitting body loaded in hydrogen into the above mentioned electric energy.

According to a further aspect, the invention concerns a method for storing hydrogen in a metallic emitting body by immersing the emitting body in an electrolyte solution suited to release hydrogen by electrolytic effect, wherein the method envisages applying an electrical voltage between two points of the emitting body suited to induce the above mentioned electrolytic effect.

According to a further aspect, the invention concerns an energy generator comprising a metallic emitting body, a loading device to cause the storage of hydrogen in the metallic lattice of the emitting body, an excitation unit to emit a stimulation suited to excite the hydrogen stored in the metallic lattice until achieving the emission of energy, and a control device to modify the stimulation in such a way as to control the intensity of the emitted energy.

According to a further aspect, the invention concerns an electric generator comprising the above mentioned energy generator and a conversion device to convert the energy emitted by the generator into electric energy.

According to a further aspect, the energy emitted by the emitting body is a radiation originating from a nuclear reaction and, more particularly, is in the form of $\beta^-$ radiation.

Advantageously, the possibility to use nuclear energy without the need to employ temperatures substantially higher than the ambient temperature, renders the method suited to be used for several applications, and, moreover, allows to make a relatively simple generator.

Still advantageously, the possibility to control the intensity of the generated energy over time renders the method suited to be used to supply systems that require a constant source of energy.

Moreover, advantageously, since the energy generated through the method is in the form of β⁻ radiation, the emission of high-energy radiations or other radiations that are harmful to the humans is prevented.

Moreover, the lack of radioactive residues in the exhaust metallic body further increases the safety of the method, thus increasing its applicability and facilitating the disposal of the metallic body.

In particular, since the β⁻ radiation is easily converted into electric energy, the method of the invention is advantageously suitable to make a compact and long-life electric energy generator.

The above mentioned aims and advantages, together with others hereinafter mentioned, will be apparent from the following description of some preferred embodiments of the invention, that are disclosed for indicative and not limiting purpose with the help of the attached drawings.

Brief description of the drawings

Fig. 1 schematically represents the energy generator of the invention, in axonometric view.

Fig. 2 represents the generator of Fig. 1, in front sectioned view.

Fig. 3 schematically represents a variant embodiment of the generator of the invention, in plan view.

Fig. 4 represents the generator of Fig. 3, in lateral sectioned view.

Fig. 5 represents an emission diagram of the electrolytic solution before and after electrolysis, obtained through LSC ((liquid scintillation counting) technology.

Fig. 6 represents a mass spectrometry of the gas in the device after electrolysis.

Detailed description of some preferred embodiments

It is hereby specified that, in the present specification, the term "hydrogen" is not used merely to indicate the hydrogen as such, whose chemical symbol is H, but also, more generally, any isotope of the hydrogen, for example deuterium, whose chemical symbol is D.

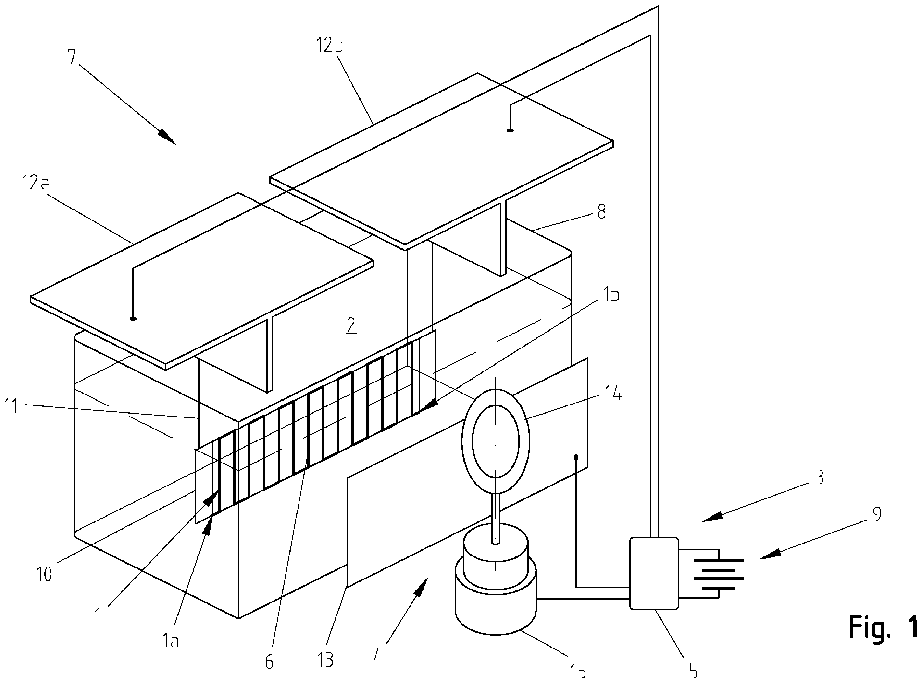

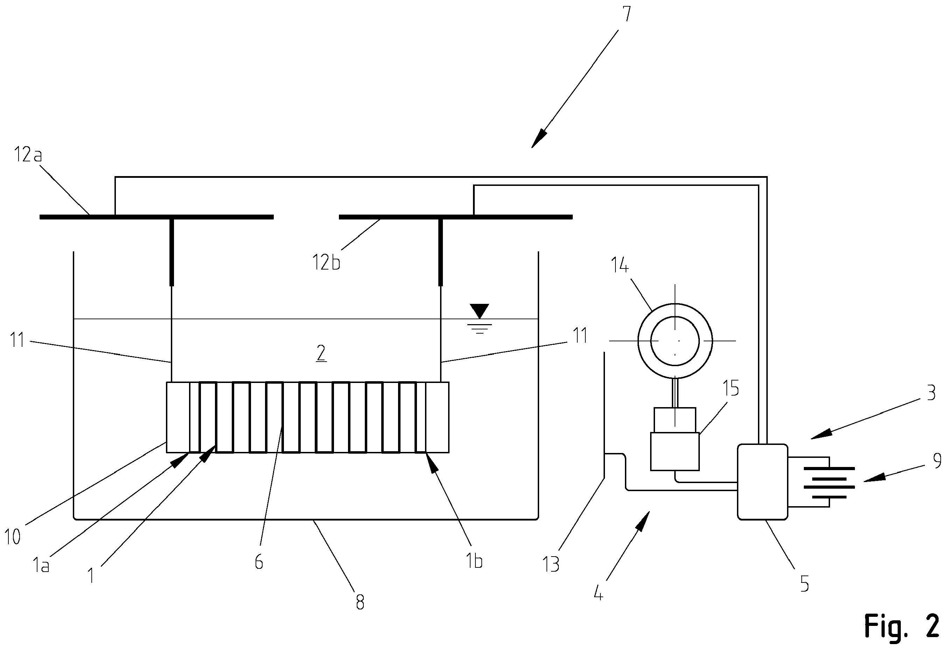

As anticipated, the present invention concerns a method for the generation of energy, that will be disclosed hereinafter by reference to a generator overall referred to in Figs. 1 and 2 by **7.**

The above mentioned generator **7** comprises an emitting body **1** made in a metal that defines a metallic lattice suited to store hydrogen. Preferably, the above mentioned metal is a transition metal, i.e., any element belonging to groups from 3 to 12 of the Periodic Table. Still preferably, the above mentioned metal is Nichel, that, advantageously, appeared to be particularly effective in the execution of the method of the invention.

The emitting body **1** represented in Figs. 1 and 2 is arranged inside a vessel **8,** which in Fig. 1 is represented in transparency, for the sake of graphical simplicity in order to see its content.

The energy generator **7** also comprises a loading device **3** configured to cause the storage of atomic hydrogen in the above mentioned metallic lattice. The process causing the hydrogen to be loaded into the lattice will be explained more in details in the following.

Additionally, the energy generator **7** comprises an excitation unit **4** configured to emit a stimulation suited to excite the hydrogen stored in the metallic lattice until obtaining the emission of a flow of energy. The above mentioned flow of energy is generated due to the triggering of nuclear reactions inside the metallic lattice, based on the already mentioned phenomena.

The applicant experimentally ascertained that the above mentioned energy is emitted mainly in the form of β⁻ radiation.

As known, a β⁻ particle has a negative charge and a mass equal to that of the electron and, in particular, is the product of the decay of a neutron into a proton.

It was already recalled that, at present, a theory capable to fully explain the above mentioned phenomenon does not yet exist. However, the applicant supposes that the hydrogen, excited by the above mentioned stimulation and being confined in the metallic lattice, can store a gradually increasing amount of vibrational energy until the point in which it is capable to induce the expulsion of neutrons belonging to nuclei of the metal of the emitting body **1,** and their consequent decay, that originates corresponding protons and corresponding β⁻ particles.

It is known that the β⁻ particles are substantially harmless for the human being. It is also known that β⁻ particles can be easily converted into electric energy through conversion devices that are not represented in the figures, but are

4

in themselves known, such as, for example, one or more Schottky diodes.

As a consequence, the energy generator 7 is particularly suited to be used in combination with one of the above mentioned conversion devices in order to make an electric generator, as it will be further explained.

Preferably, the operation for storing the hydrogen into the metallic lattice comprises the operation of generating a current of electrons between two points **1a**, **1b** of the emitting body **1**. More in particular, the current of electrons is obtained by applying an electrical voltage between the above mentioned two points **1a**, **1b**, that act as electrodes, respectively as anode and cathode.

The applicant ascertained that the above mentioned current of electrons has the effect to foster the triggering of the phenomenon that leads to emission of energy. The applicant supposes that the flow of the above mentioned current increases the capability of the metallic lattice of the emitting body **1** of holding the hydrogen inside it, bringing the advantage of enhancing the process of hydrogen storing in a first phase of the method and, in a further phase, to help maintaining the reaction.

The advantage just mentioned seems not to occur, or, at least, seems not to occur at the same intensity, in a system in which the current flows in the form of an ion exchange between the emitting body **1,** acting as cathode, and an anode that is physically separated from the emitting body **1,** both immersed in an electrolyte solution.

Moreover, the applicant supposes that the intensity of the current should be proportional to the conductive section of the emitting body **1.** In other words, an increase in the conductive section requires the use of a higher current.

As regards the stimulation of the emitting body **1** in order to excite the hydrogen until triggering the nuclear reaction, the applicant observed a relationship between the latter phenomenon and the fundamental resonance frequency of the nucleus, that, for the hydrogen, is a proton, wherein the relationship can be expressed through the known formula:

$$\nu = \gamma \, g \, B_0 \, / \, 2\pi \qquad\qquad [1]$$

wherein $\nu$ is the fundamental resonance frequency - or Larmor frequency, $\gamma$ the gyromagnetic ratio of the nucleus, and $B_0$ the intensity of the applied magnetic field. In summary, the Larmor frequency is the frequency that an electromagnetic wave should have in order for it to be absorbed by the nucleus.

It is known that the gyromagnetic ratio for the hydrogen is equal to 26750, that, with a magnetic field of 10000 gauss, corresponds to a fundamental resonance frequency equal to about 42.57 MHz.

Therefore, preferably, the above mentioned stimulation comprises the generation of a magnetic field and of a radio-frequency through the excitation unit 4. The intensity of the above mentioned magnetic field and the frequency of the above mentioned radio-frequency are in mutual relationship through the above mentioned formula.

Actually, the applicant observed that, when using a radio-frequency of 42.57 MHz, the triggering of the reaction occurs with a magnetic field of some gauss, i.e. 3-4 orders of magnitude lower than the above mentioned value of 10000 gauss. The applicant supposes that that is due to a constraining effect exerted by the metallic lattice on the hydrogen, that seems to change its gyromagnetic ratio.

It is also clear that the excitation of the hydrogen can be achieved as well, when the radio-frequency contains any harmonic of the above mentioned frequency.

Anyway, it is clear that the stimulation may occur as well in a different way compared to the one just described, provided that it is capable of causing the excitation of the hydrogen in the lattice, and the consequent storage of energy in it. For example, instead of using a radio-frequency, one might use a mechanical vibration, a laser beam, an ultrasound source, and / or any other form of energy, provided that it is suited to cause the above mentioned excitation.

The applicant was also able to maintain the intensity of the energy emitted by the emitting body **1** at a substantially constant level. This was possible by constantly modulating the above mentioned stimulation over time, in order to obtain a sort of feedback.

The above mentioned feedback comprises an operation of measuring the intensity of the emitted energy, that may be performed by means of suitable sensors, in themselves known, and an operation of modifying the values of the parameters related to the generation of the above mentioned stimulation. In particular, the stimulation parameters are modified upon detecting a deviation of the intensity of the flow of energy from the required value, the modification being such as to bring back the intensity to the above mentioned required value, in order to achieve a preset trend, for example, a substantial constancy over time, or an oscillation within a preset interval.

The feedback occurs with a high enough frequency as to allow controlling the stimulation parameters substantially in real-time.

The above mentioned modulation is performed by means of a control device 5 configured to control the stimulation parameters based on the intensity of the emitted energy.

Preferably, the control device **5** comprises a logic unit, not represented in the drawings but in itself known, that processes the input signals received from the sensors that detect the intensity of the emitted energy, as well as from other possible sensors that detect further physical parameters of the system, for example the magnetic field, and produces an output signal used to control the excitation unit **4** in order to modify the stimulation parameters as previously described.

Preferably, the excitation unit **4** is configured in such a way as to allow a controlled modulation of the intensity of the above mentioned magnetic field. The applicant has ascertained that the possibility of modulating the intensity of the magnetic field facilitates maintaining the nuclear reaction. Presumably, the above mentioned modulation allows to compensate for the normal variations in the earth magnetic field over time, in order to maintain the overall value of the two fields at a constant level. In fact, missing the above modulation, the overall magnetic field acting on the emitting body **1** would continuously change, thus unpredictably modifying the fundamental resonance frequency of the hydrogen, and preventing the hydrogen from absorbing the energy transmitted through the radio-frequency, hence preventing the maintenance of a stable nuclear reaction.

The applicant achieved the above mentioned result through a magnet **14** associated to the shaft of a stepper motor **15,** whose controlled rotation allows to modify the intensity and the polarity of the magnetic field acting on the emitting body **1.**

Still preferably, the excitation unit **4** is configured in such a way as to also allow a controlled modulation of the intensity of the radio-frequency. Advantageously, the possibility just mentioned allows to prevent excessive variations in the intensity of the flow of energy emitted by the generator **7.** Moreover, the above mentioned possibility allows to compensate for the inevitable environmental electromagnetic interference.

From what has been explained so far, it may be understood that it was possible to stabilize both the nuclear reaction, and the flow of emitted energy, by changing only two parameters, namely the intensity of the magnetic field and the intensity of the radio-frequency.

It is clear that what above described is applicable as well, with the due and obvious changes, to variant embodiments of the invention in which the excitation of the hydrogen is achieved by means of one or more further energy sources among those previously mentioned other than the radio-frequency, or in combination with it, for example mechanical vibrations, laser beams, ultrasounds, and so on. In the above mentioned variant embodiments, the parameters to be regulated comprise the intensity of the energy produced by the further sources above mentioned.

In summary, the method above described comprises a first operation of generating the magnetic field with a preset intensity, and the radio-frequency with preset frequency and intensity, until achieving the energy emission.

Subsequently, the intensity of the energy is continuously measured, while the intensity of the magnetic field and of the radio-frequency are being modulated in order to control the above energy intensity to achieve a preset trend.

It should be noted that the variations in the magnetic field and in the radio-frequency required to control the intensity of the flow of energy are not known in advance, neither in their absolute values, nor in their signs. In fact, the phenomenon relating to the generation of energy is not completely deterministic, and, moreover, it is extremely sensible to the variations of the external physical parameters, in particular of those ones related to the earth magnetic field and to the electromagnetic field, that change continuously and unpredictably.

Therefore, the modulation of the stimulation parameters occurs through an iterative procedure, comprising a very rapid sequence of small variations of the above mentioned parameters according to different directions, and the measurement of the consequent variations of the flow of energy in order to determine the optimal values for the parameters.

As regards the storage of the hydrogen in the metallic lattice, preferably it occurs through prior immersion of the emitting body **1** in an electrolyte solution **2** arranged in a vessel **8** and suited to release hydrogen by electrolytic effect.

Subsequently, an electrical voltage is applied between the above mentioned two points **1a**, **1b** of the emitting body **1,** in order to induce the above mentioned electrolytic effect.

Advantageously, since the electrolytic effect occurs at ambient temperature, it can be used to make a generator **7** having no need for special thermal insulation and that, therefore, is particularly simple and suitable also for domestic applications.

Still advantageously, the above mentioned electrical voltage is used to obtain two effects at the same time, namely to generate the electrolytic effect, and to generate the current to maintain the hydrogen trapped inside the crystal lattice, as previously explained.

As regards more in detail the emitting body **1,** preferably it comprises a threadlike body **6,** immersed in the above mentioned electrolyte solution **2.**

The opposite ends **1a**, **1b** of the threadlike body **6** are connected to, respectively, the terminals of an electric generation device **9** suited to generate the electrical voltage needed to obtain the electrolytic effect, and that, preferably but not necessarily, is a battery. In the preferred configuration, represented in the figures, the electric generation device **9** also supplies the excitation unit **4** and the control device **5**, from which the threadlike body **6** receives the above mentioned electrical voltage.

Therefore it is understood that, in the invention, the electrolytic effect is achieved by providing a single conductor element, namely the threadlike body **6,** to whose ends **1a**, **1b** the electrical voltage is applied, which is contrary to the known electrolysis devices comprising mutually separate anode and cathode that are immersed in the electrolyte solution.

In particular, the threadlike body **6** is configured in such a way that the electrical voltage between anode **1a** and cathode **1b** is high enough to generate the electrolytic effect. The above mentioned electrolytic effect causes the release of hydrogen from the electrolyte solution **2,** that is absorbed by the threadlike body **6** in different amounts across its different locations, more precisely, varying from a maximum at the level of the cathode **1b**, to a minimum at the level of the anode **1a**.

Still preferably, the threadlike body **6** has such a configuration that the passage of a current through it does not generate any magnetic component. Advantageously, the configuration just described avoids that the current passing through the threadlike body **6** interferes with the external magnetic field acting on the threadlike body **6** itself, which would introduce a further variable in the system, hence rendering more complex both the operation of modulating the stimulation, and the control device **5** performing that operation.

Preferably, the magnetic property just mentioned may be achieved by configuring the threadlike body **6** so that it defines a non-inductive coil, as may be obtained for example by arranging the threadlike body **6** on a plane with a wavy configuration. Still preferably, the above mentioned wavy configuration is achieved by laying the threadlike body **6** on a planar face belonging to a support plate **10** made in an insulating material, for example Vetronite, to which the threadlike body **6** is suitably secured, for example in correspondence of two opposite edges of the support plate **10**. More preferably, the above mentioned wavy configuration comprises a succession of mutually parallel portions of the threadlike body **6,** each one of which develops between the above mentioned two edges of the support plate **10** in a direction that is orthogonal to the said edges, and is connected to the next portion by an intermediate portion of the threadlike body **6** developing along one of the above mentioned edges and parallel thereof, in order to obtain a configuration corresponding to that of a square wave, as depicted in Fig. 2.

Clearly, the above mentioned non-inductive coil may be made by configuring the threadlike body **6** in any other way, provided that it is suited to nullify the magnetic component of the current.

As regards more specifically the metal of the emitting body **1,** in particular that of the above mentioned threadlike body **6,** preferably it is nickel. The applicant ascertained that nickel is particularly effective in generating energy with the method above described.

However, variant embodiments of the invention may envisage that the above mentioned metal be a transition metal different from nickel, for example, palladium, titanium, or other transition metals. In fact, it was observed that the transition metals are particularly effective in generating energy using the method above described.

Still preferably, the emitting body **1** comprises at least a layer of a further conducive material, for example copper or another metal, arranged in contact with the first metal of the emitting body **1** to define an interface. The applicant has ascertained that, advantageously, the electric potential difference established across the above mentioned interface enhances the absorption of hydrogen in the lattice and, therefore, determines a substantial increase in the effectiveness of the generator **7.**

According to variant embodiments of the invention, the above mentioned further conductive material may be any other conductive material suited to enhance the absorption of hydrogen in the metallic lattice.

The above mentioned further conductive material may take the form of a coating layer, being deposited on the surface of the emitting body **1,** for example through electrolytic deposition or through any other known technique, before applying the method of the invention.

Alternatively, the above mentioned coating layer may be formed as a consequence of the use of the method of the invention. The latter alternative is suited to be used when the method comprises the previously described electrolysis operation. For example, if a copper element is associated to the emitting body **1,** for example the threadlike body **6,** the copper is caused to deposit on the surface of the emitting body **1** during the electrolysis, thus causing the formation of the above mentioned coating layer on the cathode.

As regards the connection of the emitting body **1** to the electric generation device 9, that is preferably achieved by means of two conductor elements **11,** that, preferably but not necessarily, are made in silver-coated copper, that connect each one of the two ends **1a**, **1b** of the emitting body **1** to, respectively, the two contacts of the electric generation device **9**. The applicant observed that the use of bimetallic conductor elements **11** advantageously increases the effectiveness of the generator **7.**

It is understood that the method of the invention is also applicable to variant embodiments of the generator **7** that are configured differently compared to the generator described so far. Some of the said variants may envisage that the operation of loading the emitting body **1** exploits a different mechanism instead of electrolysis. For example, in one of the above mentioned variants, the emitting body **1** may be immersed in a hydrogen atmosphere, in which case the loading operation would occur thanks to the pressure of the hydrogen, and possibly to the electric current that is caused to pass through the emitting body itself, and/or to a temperature higher than the ambient temperature.

Irrespective of the generator **7** that is used, the method of the invention envisages the phase of loading the metallic lattice with hydrogen. Preferably, the first phase comprises setting the emitting body **1** in a system suited to supply hydrogen, and applying a predefined tension to the emitting body **1** itself in such a way as to cause a current to pass therethrough.

As the loading operation proceeds, a gradual increase in resistance of the emitting body **1** is observed. After a certain time, an increase in the emission of ionizing radiations is also observed, that may be detected, for example, through a Geiger counter.

At that point the stimulation phase begins, which envisages the application of the radio-frequency and, subsequently, of the magnetic field, in such a way as to excite the hydrogen stored in the lattice in order to trigger the nuclear reaction, hence achieving the consequent generation of energy in the form of $\beta^-$ particles.

Subsequently, the modulation phase is entered, in which the radio-frequency and the magnetic field are adjusted in order to sustain the nuclear reaction and to keep the intensity of the emitted energy to a substantially constant level.

The applicant observed that, in this third phase, it is preferable to reduce the intensity of the radio-frequency compared to that used in the second phase, by 30-40 dB for example.

Moreover, the nuclear reaction can be interrupted at any moment, by simply interrupting the stimulation.

The current applied to the emitting body **1** is kept constant along the whole experiment, in order to limit the number of stimulation parameters and, consequently, to facilitate maintaining the reaction. However, the current might be noticeably reduced after the triggering, to advantage of the overall efficiency of the generator **7**.

As previously anticipated, the present invention also comprises an electric generator comprising, in turn, the generator **7** above described and a conversion device, not represented in the drawings but in itself known, that is configured to convert the energy produced by the generator **7** into electric energy.

Preferably, the conversion device comprises one or more Schottky diodes, which, as known, allow to convert the $\beta^-$ particles of energy flow into electric energy.

Preferably, the above mentioned Schottky diodes are arranged around the generator **7** in such a way as to intercept the $\beta^-$ particles emitted according to a plurality of directions in space. Still more preferably, the Schottky diodes are uniformly arranged on a three-dimensional surface enclosing the generator **7** and that, for example, may have a spherical shape.

Further variant embodiments of the invention may comprise a plurality of emitting bodies **1,** provided they are all subjected to the above mentioned radio-frequency and magnetic field. Advantageously, multiple emitting bodies **1** allow to increase the intensity of the energy produced by the generator **7**.

First example of application

The applicant applied the method of the invention using a generator **7** that comprises an emitting body **1** in the form of a threadlike body **6,** more precisely a nickel wire that has an initial resistance of about 0.9 $\Omega$ (Ohm), immersed in an electrolyte solution **2** composed of about 20 g of potassium hydroxide (KOH) dissolved in about 500 cl of water.

The nickel wire is laid on a Vetronite board and is secured to the two opposite edges of the board so that is has a configuration similar to a square wave.

The two ends **1a**, **1b** of the nickel wire are connected to two copper electrodes **12a, 12b,** preferably in correspondence of the respective copper-coated ends of the Vetronite board, through corresponding wires in silver-coated copper, that correspond to the above mentioned conductor elements **11**. The electrodes **12a** and **12b** are connected to, respectively, the anode and the cathode of a power supply, that corresponds to the electric generation device **9**.

The power supply is preliminarily adjusted in order to supply a constant current of about 3.18 A.

The equipment also comprises a magnetometer, a Geiger counter, a neutron detector, and a gamma spectrometer.

The experiment begins with connecting the power supply to the electrodes **12a, 12b** to start the electrolysis. A tension of about 2.8 V is initially detected between anode and cathode. However, as time passes, the above mentioned tension gradually increases as a consequence of an increase in resistance of the nickel wire, due to its being loaded with hydrogen. When the tension reaches a value of about 3.3 V, a noticeable increase in the background signal of the Geiger counter is observed.

At that point, the stimulation is applied to the nickel wire, by subjecting it to a radio-frequency signal of 42.57 MHz, or its harmonics. Preferably, the radio-frequency signal is emitted by an antenna **13** consisting of a metal plate whose dimensions are 50 x 5 mm, arranged outside of the electrolyte solution **2,** and, preferably, parallel to the Vetronite board. It is noted that antenna **13** is represented in Fig. 1 in the position just mentioned, while, for the sake of simplicity of representation, Fig. 2 depicts the antenna **13** in a different position as the one above mentioned.

According to variant embodiments of the invention, the antenna **13** might be configured differently than above described, for example as a logarithmic antenna.

After some minutes, the magnetic field is also applied, which is obtained by means of a 200 Gauss magnet mounted on the shaft of a stepper motor. The magnet is rotated in such a way that the intensity of the magnetic field on the area of the end **1b** of the nickel wire, that corresponds to the cathode, is comprised between about 3 and 7 Gauss.

At that point, the Geiger counter detects a sudden increase in the emission level, as well as a simultaneous increase by about 3 times in the emitted neutrons count, from about 10 neutrons per hour to 30 neutrons per hour, proving that a nuclear reaction is triggered.

The analysis of the signal from the gamma spectrometer indicates that the energy is emitted in the form of β⁻ particles. As known, the gamma spectrometer is suited to indirectly detect also β⁻ particles, by measuring X rays generated as a consequence of the emission of the above particles. Moreover, the emitted neutrons are in a small number, and moreover they are slow, thus they may be shielded easily. Hence, advantageously, the invention is easy to implement on a wide range of uses.

By continuously modulating the stimulation parameters, i.e. the intensity of the radio-frequency and of the magnetic field, it was possible to sustain the nuclear reaction over time. In particular, the intensity of the radio-frequency was reduced by about 35 dB compared to its initial value.

Finally, by interrupting the stimulation, a rapid weakening in the reading of the Geiger counter and of the neutron detector was observed, indicating a gradual extinction of the nuclear reaction.

The applicant performed further experiments with supply currents different than the one above described. Those experiments seem to indicate peaks of intensity of the emitted energy in correspondence of certain discrete values of the supply current.

Second example of application

In a second experiment, that is a development of the first example, the applicant used a device and a procedure similar to those used in the first example, except for some changes and additions that will be disclosed in the following.

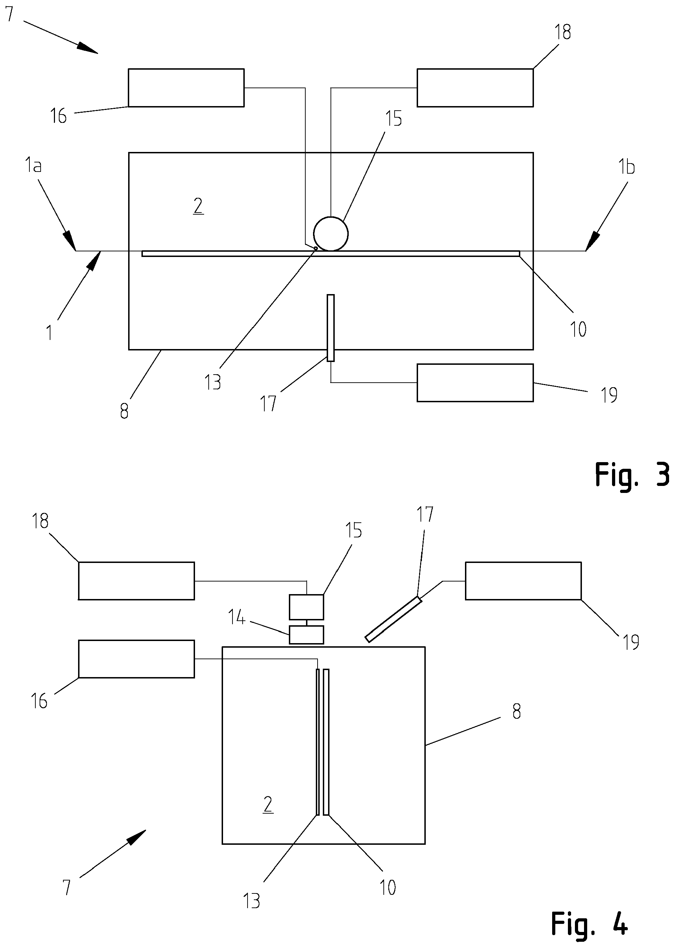

The device is schematically represented in Figs. 3 and 4, where, for the sake of simplification, the same numerals as in the previous example are used for corresponding elements of the device.

The vessel **8** contains a 5% solution of KOH, in which the emitting body **1** is immersed.

The emitting body **1** is a nickel wire developing with a "square wave" configuration, similar to that represented in Figs. 1 and 2, achieved by associating the wire, alternately, to the two opposite edges of an alumina support plate **10,** also immersed in the solution and arranged vertically.

More specifically, the above square-wave configuration is achieved by arranging the wire on the plane of the support plate **10** in a succession of 28 portions, that are substantially parallel to one another and oriented vertically, whose upper ends are connected by 14 substantially horizontal portions corresponding to the "crests" of the square wave, and 13 substantially horizontal portions corresponding to the "troughs" of the square wave, to define 14 substantially identical wave cycles. The length of the horizontal portions is equal to about 3 mm each, while the length of the vertical portions is equal to about 30 mm each.

The excitation unit comprises a 5000-6000 gauss magnet **14,** mounted on the shaft of a stepper motor **15,** depicted in Fig. 4, controlled by a corresponding controller **18.** Motor **15** used in the experiment has 2048 steps per revolution, hence allowing to reach a high precision of rotation for the magnet **14.**

Magnet **14** is arranged above the vessel **8,** in correspondence with the wire portion that corresponds to the ninth cycle of the square wave, wherein the cycles are counted starting from the cathode. As a consequence, the ninth cycle is closer to the anode than to the cathode. Still preferably, the magnet **14** is arranged close to the crest of the above cycle.

The applicant observed that the stimulation efficacy varies as the position of the magnet **14** changes along the wire, reaching a maximum in correspondence to the above mentioned position. The applicant assumes that the above variation depends on the variation of the stoichiometric ratio between hydrogen and oxygen at the different points of the solution during electrolysis. As a consequence, if the emitting body **1** has a configuration different than the one above described, the maximum stimulation efficacy seems anyway reachable when magnet **14** is arranged at the point where the solution has the same stoichiometric ratio as that measured in the above mentioned point.

The excitation unit also comprises an antenna **13** in circular polarization, connected to a radiofrequency generator **16** whose power is adjustable, preferably between -36 and -20 dBm. As it may be seen in Fig. 4, antenna **13** is arranged inside the vessel **8,** in order to face the plate **10.** In particular, antenna **13** faces plate **10** in correspondence of the same point in which magnet **14** is arranged, for the same reasons as above mentioned.

It is noted that, to simplify the graphical representation, Fig. 3 shows antenna **13** in a position that is slightly displaced on a side with respect of magnet **14** and corresponding motor **15,** in order for it to be seen from above. However, preferably, the antenna is arranged below magnet **14.**

The excitation unit further comprises a laser emitter **17,** operated by a corresponding controller **19,** that directs the laser beam to, preferably, the same point as above disclosed of the emitting body **1.** More specifically, the laser beam **17** is being emitted according to a direction that lays on a vertical plane that is perpendicular to the plane of the plate **10,** and inclined by an angle of 30-45° downwards with respect of a horizontal plane. The applicant observed that the laser beam, inclined as above disclosed, leads to the maximum stimulation efficacy, probably due to the interaction between the phase with the material of the wire.

The laser beam assists the initial triggering of the reaction in addition to the radiofrequency and the magnetic field. In fact, the laser beam is a coherent signal that is suited to excite the hydrogen, even though only at the surface of the metallic lattice. The most efficient laser light has been found to be green light, in particular that with a wavelength of about 560 nm.

Still preferably, the laser emitter **17** may direct a second laser beam, in replacement of, or in addition to, the beam above mentioned, in the area of the wire that corresponds to the first cycles of the square wave, for example the first three cycles. The area just mentioned corresponds to the area of the electrolyte in which most of the hydrogen is produced during electrolysis, hence illuminating the above mentioned wire portion increases the stimulating action on the hydrogen, thus the efficacy of the device.

Operatively, the loading of hydrogen in the above disclosed device occurs as in the previous experiment, by using a 3-4 A current for a time of about 30-60 min.

Afterwards, the stimulation is made, beginning with the laser beam and the radiofrequency, then with the magnetic field, and rotating the magnet **14** until detecting production of $\beta^-$ particles.

The process continues with the modulation phase, similarly to what has been explained above.

Laboratory analyses

After the experiments, some samples of the electrolytic solution collected from the device after the reaction were analyzed by two different independent laboratories, and compared with samples of the same solution that were not used in the device.

The analyses were made through LSC (liquid scintillation counting) technology, in order to detect $\beta^-$ particle emission.

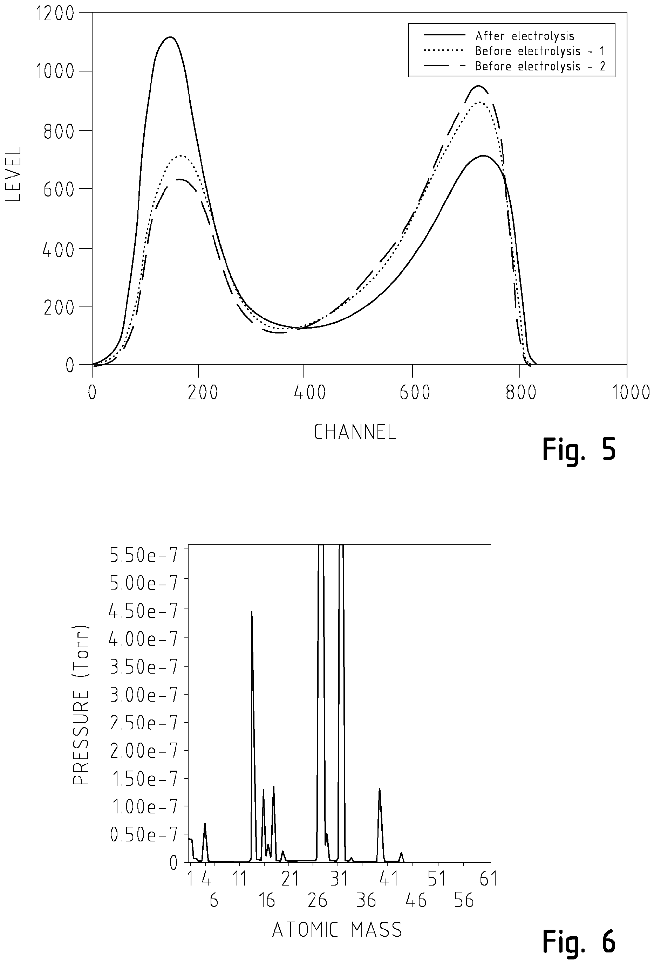

The results provided by the analyses were mutually consistent, and revealed anomalous emissions with a peak in correspondence to the spectrum of tritium (T). This can be seen in the diagram of Fig. 5, that reports the result of one of the above analyses. The diagram corresponds to the average line of the real curve. From the figure, it may be observed that the electrolyte sample after the electrolysis process - the continuous curve - has a very pronounced emission peak at the channel of 150 keV, corresponding to tritium, with a level that is about as twice as the peak of the two samples collected before electrolysis - dotted curve and dashed curve, respectively. The peak around 700 keV instead corresponds to that of the potassium (K-40).

At the same time, the analyses did not reveal emission from the samples after distillation, hence indicating a very volatile emitting substance. Therefore, if tritium is involved, it seems that it is not in the form of tritium water ($T_2O$), but rather it is dissolved in the electrolyte in gaseous form ($T_2$). As a consequence, the reaction does not imply radioactive mutations of the electrolytic solution.

What has just been said is confirmed by the diagram of Fig. 6, representing the result of an analysis with a mass spectrometer of the gas in the vessel 8 after electrolysis. A peak may be observed in correspondence of the atomic mass 4, corresponding to the molecule of HT (hydrogen-tritium).

Finally, the analyses did not revealed gamma radiations other than background ones.

The findings seems to be consistent with previously cited theory by Gamberale. More specifically, the applicant assumes that the excitation phase puts hydrogen into coherent vibration, inducing it to capture electrons and to originate neutrons. The neutrons remain confined in the metallic lattice and are later captured by other hydrogen nuclei, thus originating deuterium at first, and gaseous tritium in a subsequent capture, that being released in the electrolytic solution and, subsequently, in the atmosphere.

The tritium so generated quickly decays with emission of $\beta^-$ particles. The above particles trigger the subsequent production of energy by the isotopes of nickel having very short half-lives, thus bringing the reaction to a state of substantial self-sustainment. In this second phase, the emission of $\beta^-$ particles by nickel isotopes greatly exceeds the emission by tritium, despite production by tritium being also increased.

From what described above, it is understood that the method and the generator of the invention reach the preset aims.

In particular, the invention allows to generate energy by inducing the excitation of the hydrogen stored in a metallic body until triggering a nuclear reaction at a temperature that is equal, or close, to the ambient temperature, that hence is substantially lower compared to the ordinary temperature at which the conventional nuclear reactions used to produce energy occur.

Moreover, the invention is based on generating $\beta^-$ particles, while it does neither imply any emission of high-energy particles and radiations, as γ radiations are, nor a formation of radioactive residues in the metallic body.

Moreover, modulating the stimulation parameters allows to maintain the flow of emitted energy, as well as to control its intensity, in a relatively simple way.

The invention is susceptible of changes and variants included in the inventive concept expressed in the attached claims. In particular, the elements of the invention might be replaced by other technically-equivalent elements.

Moreover, the materials might be chosen according to the needs, without departing from the scope of the invention.

Moreover, one or more elements of a specific embodiment of the invention that are technically compatible with another specific embodiment of the invention might be introduced in the latter in addition to, or in replacement of, elements of the latter.

Where the technical elements specified in the claims are followed by reference signs, those reference signs are included to the sole purpose of improving the understanding of the invention, hence they do not imply any limitation of the scope of protection claimed.

**Claims**

1. Method for energy generation, comprising the following operations:

   - providing an emitting body (1) made in a metal that defines a metallic lattice suited to store hydrogen;
   - causing the storage of hydrogen in said metallic lattice;
   - exposing said emitting body (1) to a stimulation suited to excite said hydrogen stored in said metallic lattice to obtain the emission of said energy;
   - modulating said stimulation over time in such a way as to control the emission of said energy.

2. Method according to claim 1, **characterized in that** said operation of causing said storage of hydrogen in said metallic lattice comprises the operation of generating a current of electrons between two points (1a, 1b) of said emitting body (1).

3. Method according to any claims from 1 to 2, **characterized in that** said stimulation comprises generating a laser beam.

4. Method according to any claim from 1 to 3, **characterized in that** said stimulation comprises generating a magnetic field.

5. Method according to any claim from 1 to 4, **characterized in that** said stimulation comprises generating a radio-frequency.

6. Method according to claim 5 when in combination with claim 4, **characterized in that** it comprises the following operations:

   - generating said magnetic field having a predefined intensity and said radio-frequency having a predefined frequency and a predefined intensity until obtaining said emission of said energy;
   - measuring the intensity of said emitted energy;
   - modulating the intensities of said magnetic field and of said radio-frequency based on the variations of said intensity of said emitted energy to control said intensity of said emitted energy.

7. Method according to any claim from 1 to 6, **characterized in that** said operation of causing the storage of hydrogen in said metallic lattice comprises the following operations:

   - providing an electrolyte solution (2) suited to release said hydrogen by electrolytic effect;
   - immersing said emitting body (1) in said electrolyte solution (2);
   - applying an electric voltage between two points (1a, 1b) of said emitting body (1) in such a way as to induce said electrolytic effect.

8. Method to generate electric energy, **characterized in that** it comprises the following operations:

   - generating energy through a method according to any preceding claim, said energy comprising a radiation of $\beta^-$ type;
   - converting said radiation of $\beta^-$ type into said electric energy.

9. Energy generator (7), comprising:

   - an emitting body (1) made in a metal that defines a metallic lattice suited to store hydrogen;
   - a loading device (3) configured to cause the storage of said hydrogen in said metallic lattice;

- an excitation unit (4) configured to emit a stimulation suited to excite said hydrogen stored in said metallic lattice to obtain the emission of said energy;
- a control device (5) to operate said excitation unit (4) in such a way as to modulate said stimulation to control the intensity of said emitted energy.

10. Generator (7) according to claim 9, **characterized in that** said emitting body (1) comprises a threadlike body (6).

11. Generator (7) according to claim 10, **characterized in that** said threadlike body (6) is configured in such a way as to define an anti-inductive coil.

12. Generator (7) according to any claims from 9 to 11, **characterized in that** said emitting body (1) is made in a transition metal.

13. Generator (7) according to any claims from 9 to 12, **characterized in that** said loading device (3) comprises:

- a vessel (8) in which an electrolyte solution (2) is arranged that is suitable to release hydrogen due to electrolytic effect, said emitting body (1) being immersed in said electrolyte solution (2);
- an electric generation device (9) to apply an electrical voltage between two points (1a, 1b) of said emitting body (1) in such a way as to induce said electrolytic effect.

14. Generator (7) according to any claims from 9 to 13, **characterized in that** said excitation unit (4) comprises a magnet (14) and an antenna (13) for emitting a radiofrequency signal.

15. Electric generator comprising:

- a generator (7) according to any claims from 9 to 14;
- a conversion device to convert said energy emitted by said generator (7) into electric energy.

Fig. 1

Fig. 2

Fig. 3

Fig. 4

Fig. 5

Fig. 6

**REFERENCES CITED IN THE DESCRIPTION**

**Patent documents cited in the description**

- US 2016322119 A

**Non-patent literature cited in the description**

- *22nd Conferenza Internazionale sulla Scienza Nucleare della Materia Condensata (International Conference on Condensed Matter Nuclear Science),* 2019
- **U. MASTROMATTEO.** *LENR evidence with hydrogen and deuterium loading in thin palladium films*
- **T. UCHIKOSHI.** *Laser Condensed-Matter Fusion Experiments, Oral and Poster*
- **J. GARAI.** *Physical Model for Lattice Assisted Nuclear Reactions*
- **D. S. SZUMSKI.** *The Least Action Nuclear Process [LANP] Computer Model of Cold Fusion Poster*
- *Coherent Neutron Production,* May 2020
- **SMITH, HENDRICKS ; STEINETZ.** Electrolytic co-deposition neutron production measured by bubble detectors. *Journal of Electroanalytical Chemistry,* 19 January 2021, vol. 882, 115024
- **STEINETZ ; HENDRICKS.** *Experimental Observations of Nuclear Activity in Deuterated Materials Subjected to a Low-Energy Photon Beam,* 2017